# EUROPEAN PATENT APPLICATION

(11) **EP 4 325 924 A1**
(43) Date of publication of application: **21.02.2024**
(21) Application number: 21937038.4
(22) Date of filing: 07.12.2021
(51) Int. Cl.: H04W 16/32, H04W 72/04, H04W 48/18, H04W 84/06

(54) **COMMUNICATION CONTROL DEVICE, COMMUNICATION CONTROL METHOD, AND COMMUNICATION CONTROL PROGRAM**

(30) Priority: 12.04.2021 JP 2021066897
(71) Applicant: Rakuten Mobile, Inc., Tokyo 158-0094 (JP)
(72) Inventor: CHIBA Tsunehiko, Tokyo 158-0094 (JP); MUHAMMAD Awn, Tokyo 158-0094 (JP)
(74) Representative: Betten & Resch
(86) International application number: PCT/JP2021/044998
(87) International publication number: WO 2022/219845

(57) **Abstract**

A communication control apparatus 3 controls a terrestrial network comprising terrestrial base station 111 installed on the ground and a non-terrestrial network comprising flying communication satellite 131. The non-terrestrial network is provided with a satellite antenna 134 capable of communicating with the communication satellite 131, and a non-terrestrial signal processing unit 135 that processes non-terrestrial signal communicated with communication device 2 in the satellite communication cell 132. The communication control apparatus 3 comprises: a non-terrestrial communication quality information sharing unit 34 that shares, among the non-terrestrial signal processing unit 135 and the terrestrial network, non-terrestrial communication quality information regarding the quality of the non-terrestrial communication between communication device 2 and the satellite antenna 134; and a communication ratio determining unit 135 that determines the ratio of the terrestrial network and the non-terrestrial network to be used for communication with communication device 2 based on the non-terrestrial communication quality information (Figure 2).

## Description

### BACKTERRESTRIAL OF THE INVENTION

### 1. Field of the Invention

The present disclosure relates to communication control technology in communication system.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which will be the next generation of wireless communication standards following 5G.

Mobile communication networks for mobile or portable communication devices such as smartphones and cell phones (hereinafter collectively referred to as "communication device(s)") are usually constructed by communication cells (hereinafter referred to as "terrestrial communication cell(s)") provided by base stations installed on the ground (hereinafter referred to as "terrestrial base station(s)"). However, in some areas, it was difficult to install a sufficient number of terrestrial base stations for various reasons, resulting in a relatively low quality of mobile communications.

In order to solve the problem of the disparity in mobile communication quality among different regions and the so-called "out-of-range" problem, where mobile communication devices cannot communicate in some regions, non-terrestrial networks (NTN) have been considered. In NTN, communication satellites or unmanned aircrafts flying in outer space or the atmosphere, such as the stratosphere, are used as base stations (hereinafter referred to as non-terrestrial base station(s), and especially communication satellites are referred to as satellite base station(s)). The non-terrestrial base station provides a communication cell on the ground (hereinafter referred to as non-terrestrial communication cell(s), and especially communication cells provided by communication satellites are referred to as satellite communication cell(s)). A communication device in a non-terrestrial communication cell communicates with a non-terrestrial base station directly or indirectly via other communication devices. By providing non-terrestrial communication cells in areas where terrestrial communication cells are not sufficient, the quality of mobile communication in such areas can be improved.

Patent Literature 1: JP-A-2010-278886

### SUMMARY OF THE INVENTION

In a communication system in which a terrestrial network (TN) comprised of terrestrial base stations and a non-terrestrial network (NTN) comprised of non-terrestrial base stations coexist as described above, a communication device in the overlapping area of terrestrial communication cells and non-terrestrial communication cells can communicate with both TN and NTN. In a communication system with multiple NTNs comprised of multiple non-terrestrial base stations that are different from each other, a communication device in the overlapping area of multiple non-terrestrial communication cells that are different from each other can communicate with any of the NTNs. The present inventor has independently explored the potential improvement in efficiency of communication in such a case where a communication device in a non-terrestrial communication cell can also communicate with other communication cells (terrestrial communication cells or other non-terrestrial communication cells), and has completed the present disclosure.

The present disclosure was made in consideration of this situation, and its purpose is to provide a communication control apparatus etc. that can improve the efficiency of communication when a communication device in a non-terrestrial communication cell can also communicate with other communication cells.

In order to solve the above problem, a communication control apparatus in a certain aspect of the present disclosure controls a terrestrial network comprising terrestrial base station installed on the ground and capable of communicating with communication device in a terrestrial communication cell provided by the terrestrial base station, and a non-terrestrial network comprising flying non-terrestrial base station and capable of communicating with communication device in a non-terrestrial communication cell provided by the non-terrestrial base station, wherein the non-terrestrial network is provided with an antenna capable of communicating with the non-terrestrial base station, and a non-terrestrial signal processing unit that processes non-terrestrial signal communicated with communication device in the non-terrestrial communication cell via the antenna and the non-terrestrial base station. The communication control apparatus comprises: a non-terrestrial communication quality information sharing unit that shares, among the non-terrestrial signal processing unit and the terrestrial network, non-terrestrial communication quality information regarding the quality of the non-terrestrial communication via the non-terrestrial base station between communication device in the non-terrestrial communication cell and the antenna; and a communication ratio determining unit that determines the ratio of the terrestrial network and the non-terrestrial network to be used for communication with communication device in overlapping area of the terrestrial communication cell and the non-terrestrial communication cell based on the non-terrestrial communication quality information.

In this aspect, the usage ratio of terrestrial network and non-terrestrial network is determined based on the non-terrestrial communication quality information shared among the terrestrial network and non-terrestrial network (non-terrestrial signal processing unit) for the communication device within the overlapping area of terrestrial communication cell and non-terrestrial communication cell. For example, when the quality of the non-terrestrial communication is high, the usage ratio of the non-terrestrial network is increased, and when the quality of the non-terrestrial communication is low, the usage ratio of the terrestrial network is increased.

Another aspect of the present disclosure is also a communication control apparatus. The apparatus controls a first non-terrestrial network comprising flying first non-terrestrial base station and capable of communicating with communication device in a first non-terrestrial communication cell provided by the first non-terrestrial base station, and a second non-terrestrial network comprising flying second non-terrestrial base station and capable of communicating with communication device in a second non-terrestrial communication cell provided by the second non-terrestrial base station, wherein the first non-terrestrial network is provided with a first antenna capable of communicating with the first non-terrestrial base station, and a first non-terrestrial signal processing unit that processes first non-terrestrial signal communicated with communication device in the first non-terrestrial communication cell via the first antenna and the first non-terrestrial base station, the second non-terrestrial network is provided with a second antenna capable of communicating with the second non-terrestrial base station, and a second non-terrestrial signal processing unit that processes second non-terrestrial signal communicated with communication device in the second non-terrestrial communication cell via the second antenna and the second non-terrestrial base station. The communication control apparatus comprises: a non-terrestrial communication quality information sharing unit that shares, among the first non-terrestrial signal processing unit and the second non-terrestrial signal processing unit, first non-terrestrial communication quality information regarding the quality of the first non-terrestrial communication via the first non-terrestrial base station between communication device in the first non-terrestrial communication cell and the first antenna, and second non-terrestrial communication quality information regarding the quality of the second non-terrestrial communication via the second non-terrestrial base station between communication device in the second non-terrestrial communication cell and the second antenna; and a communication ratio determining unit that determines the ratio of the first non-terrestrial network and the second non-terrestrial network to be used for communication with communication device in overlapping area of the first non-terrestrial communication cell and the second non-terrestrial communication cell based on the first non-terrestrial communication quality information and the second non-terrestrial communication quality information.

In this aspect, the usage ratio of first non-terrestrial network and second non-terrestrial network is determined based on the first non-terrestrial communication quality information and the second non-terrestrial communication quality information shared among the first non-terrestrial network (first non-terrestrial signal processing unit) and second non-terrestrial network (second non-terrestrial signal processing unit) for the communication device within the overlapping area of first non-terrestrial communication cell and second non-terrestrial communication cell.

Further another aspect of the present disclosure is a communication control method. The method controls a terrestrial network comprising terrestrial base station installed on the ground and capable of communicating with communication device in a terrestrial communication cell provided by the terrestrial base station, and a non-terrestrial network comprising flying non-terrestrial base station and capable of communicating with communication device in a non-terrestrial communication cell provided by the non-terrestrial base station, wherein the non-terrestrial network is provided with an antenna capable of communicating with the non-terrestrial base station, and a non-terrestrial signal processing unit that processes non-terrestrial signal communicated with communication device in the non-terrestrial communication cell via the antenna and the non-terrestrial base station. The communication control method comprises: sharing, among the non-terrestrial signal processing unit and the terrestrial network, non-terrestrial communication quality information regarding the quality of the non-terrestrial communication via the non-terrestrial base station between communication device in the non-terrestrial communication cell and the antenna; and determining the ratio of the terrestrial network and the non-terrestrial network to be used for communication with communication device in overlapping area of the terrestrial communication cell and the non-terrestrial communication cell based on the non-terrestrial communication quality information.

In addition, any combination of the above components, and any conversion of the expression of the present disclosure among methods, devices, systems, recording media, computer programs, and the like, is also valid as a form of the present disclosure.

According to the present disclosure, the efficiency of communication when a communication device in a non-terrestrial communication cell can also communicate with other communication cells can be improved.

### BRIEF DESCRIPTION OF THE DRAWINGS

Figure 1 is schematic overview of the wireless communication system to which the communication control apparatus is applied. Figure 2 is functional block diagram of the first embodiment of the communication control apparatus.
Figure 3 shows an example of communication control processes by the communication control apparatus according to the first embodiment. Figure 4 is functional block diagram of the second embodiment of the communication control apparatus.
Figure 5 shows an example of communication control processes by the communication control apparatus according to the second embodiment. Figure 6 is functional block diagram of the third embodiment of the communication control apparatus.
Figure 7 shows an example of communication control processes by the communication control apparatus according to the third embodiment.

### DETAILED DESCRIPTION OF THE INVENTION

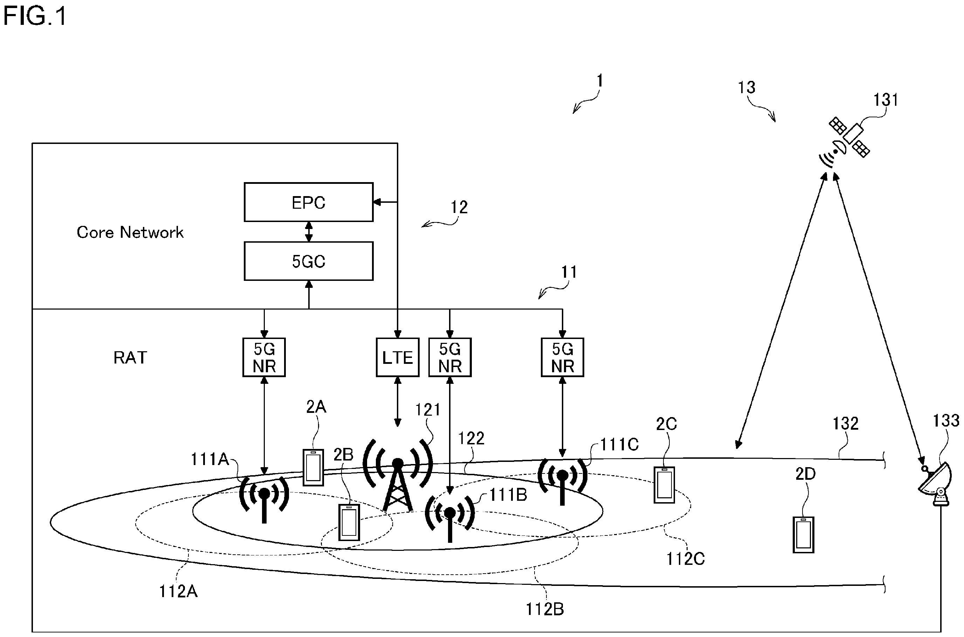

Figure 1 schematically shows an overview of a wireless communication system 1 to which the communication control apparatus according to an embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark).

The 5G wireless communication system 11 may include a plurality of 5G base stations 111A, 111B, and 111C (hereinafter collectively referred to as 5G base station 111) installed on the ground capable of communicating by 5G NR with communicators or communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similarly to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similarly to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similarly to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and the 4G base station 121 as terrestrial base stations that constitute the terrestrial network (TN). In this way, the gateway 133 connects the non-terrestrial network (NTN), which is comprising communication satellites 131 as non-terrestrial base stations or satellite base stations, and the TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication radio wave to the communication device 2D in the satellite communication cell 132, thereby the communication quality with the communication device 2D is improved. As described below, the communication resources of both the communication satellite 131 and the terrestrial base stations 111, 121 may be combined to improve the efficiency of communication with one or more communication devices 2.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit outer space at a height of about 500 km to 700 km above the ground as a flying non-terrestrial base station. However, a communication satellite flying in geostationary orbit or other higher orbit in outer space, or an unmanned or manned aircraft flying in stratosphere or other lower (e.g. about 20 km above the ground) atmosphere may be used as a non-terrestrial base station in addition to or instead of the communication satellite 131.

As described above, the wireless communication system 1 of Figure 1 includes the terrestrial network (TN) 11, 12, capable of communicating with communication device 2 in the terrestrial communication cell 112, 122 provided on the ground by terrestrial base station 111, 121 installed on the ground, and the non-terrestrial network (NTN) 13, capable of communicating with communication device 2 in the non-terrestrial communication cell 132 provided on the ground by flying non-terrestrial base station 131. In such a wireless communication system 1 where TNs 11, 12 and NTN 13 coexist, the communication device 2 in the overlapping area OA of terrestrial communication cells 112, 122 and non-terrestrial communication cells 132 can communicate with both TNs 11, 12 and NTN 13.

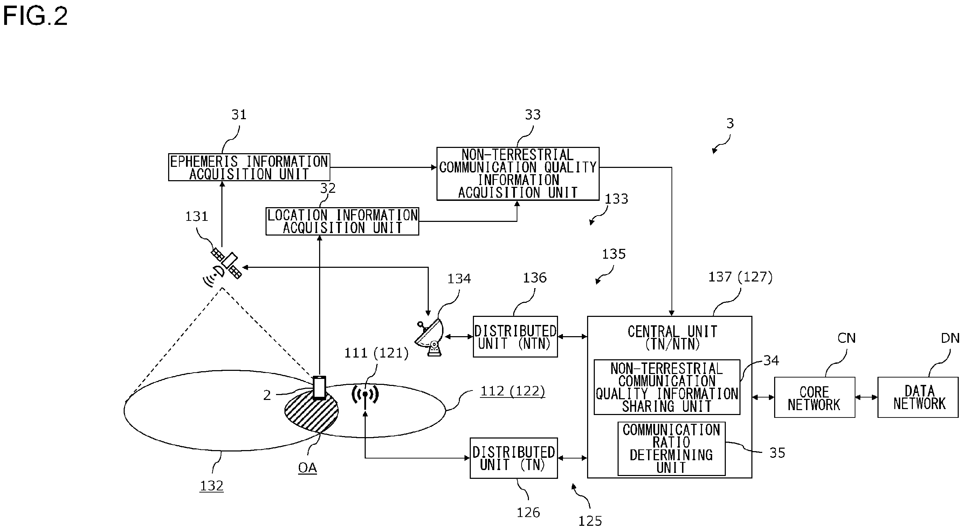

Figure 2 shows a functional block diagram of the first embodiment of the communication control apparatus 3 that controls the communication of the communication device 2 in the overlapping area OA of the terrestrial communication cells 112, 122 and the non-terrestrial communication cell 132. The gateway 133 in the NTN is equipped with a satellite antenna 134 that can communicate with a communication satellite 131, and a non-terrestrial signal processing unit 135 that processes non-terrestrial signals communicated with a communication device 2 in a satellite communication cell 132 via the satellite antenna 134 and communication satellite 131.

The non-terrestrial signal processing unit 135 is a baseband unit that processes the non-terrestrial signals in baseband, and comprises distributed unit 136 on the side of satellite antenna 134 and/or the communication satellite 131 and central unit 137 on the side of core network CN. The distributed unit 136 and the central unit 137 are interconnected by the F1 interface etc. The distributed unit 136 and the central unit 137, which constitute the NTN, also function as a part or node of the radio access network (RAN) of the TN. Specifically, the pair of distributed unit 136 and central unit 137 has the similar baseband functions as the terrestrial base stations 111 and 121 in the TN. It is possible to set up one or both of the distributed unit 136 and the central unit 137 in a relay facility outside the gateway 133, communication satellite 131 etc.

As in the NTN, the terrestrial base stations 111 and 121 in the TN comprises a terrestrial signal processing unit 125 that processes terrestrial signals communicated with a communication device 2 in terrestrial communication cell 112, 122. The terrestrial signal processing unit 125 is a baseband unit that processes the terrestrial signals in baseband, and comprises distributed unit 126 on the side of the terrestrial base station 111, 121 and central unit 127 on the side of core network CN. The distributed unit 126 and the central unit 127 are interconnected by the F1 interface etc. In the example shown in Figure 2, the central unit 127 of the TN and the central unit 137 of the NTN are integrated into a single central unit. It is possible to set up one or both of the distributed unit 126 and the central unit 127 in a relay facility etc. outside the terrestrial base station 111, 121.

The concepts of "distributed unit" and "central unit" were introduced in 5G, but similar functional units may be provided under different names in wireless communication standards such as 4G before 5G and 6G after 5G. The terms "distributed unit" and "central unit" in the present disclosure and embodiments encompass such similar functional units in communication standards other than 5G. In this context, "distributed unit" refers to the subunit on the base station 111, 121 and 131 side (or antenna side) of the baseband unit provided in conjunction with base stations 111, 121, 131, and "central unit" refers to the subunit on the core network CN side of the baseband unit provided in conjunction with base stations 111, 121, 131.

The communication control apparatus 3 includes the ephemeris information acquisition unit 31, the location information acquisition unit 32, the non-terrestrial communication quality information acquisition unit 33, the non-terrestrial communication quality information sharing unit 34, and the communication ratio determining unit 35. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. Especially in this embodiment, some or all of each of the above functional blocks of the communication control apparatus 3 may be realized by computer and/or processor provided in the communication device 2, the communication satellite 131, the non-terrestrial signal processing unit 135 (distributed unit 136 and/or central unit 137), the terrestrial base station 111, 121, the terrestrial signal processing unit 125 (distributed unit 126 and/or central unit 127), and the core network CN.

The ephemeris information acquisition unit 31 acquires the ephemeris information or location information of the communication satellite 131 as a non-terrestrial base station. The location information acquisition unit 32 acquires the location information of the communication device 2 in the overlapping area OA of the terrestrial communication cells 112, 122 and the non-terrestrial communication cell 132. For example, measurement data of a positioning sensor based on a satellite positioning system, such as GPS or GNSS, provided in the communication device 2 in the overlapping area OA can be used as the location information. The cell ID (also referred to as Cell Global Identifier etc.) of communication cell (terrestrial communication cells 112, 122 and/or non-terrestrial communication cell 132) to which the communication device 2 in the overlapping area OA is communicating or connecting, or the tracking area code of the tracking area (also called location registration area) in which the communication device 2 in the overlapping area OA is located, which are managed by the core network CN etc. can also be used as the location information to indicate the location of the communication device 2. In addition to the above, various other known positioning methods may be used to obtain the location information of the communication device 2.

The non-terrestrial communication quality information acquisition unit 33 acquires non-terrestrial communication quality information regarding the quality of non-terrestrial communication or satellite communication between the communication device 2 in the non-terrestrial communication cell 132 and the satellite antenna 134 via the communication satellite 131, based on the ephemeris information of the communication satellite 131 acquired by the ephemeris information acquisition unit 31 and the location information of the communication device 2 acquired by the location information acquisition unit 32. The non-terrestrial communication quality information includes at least one of the Doppler shift between the communication device 2 in the non-terrestrial communication cell 132 and/or satellite antenna 134 and the communication satellite 131, and the communication delay between the communication device 2 in the non-terrestrial communication cell 132 and/or satellite antenna 134 and the communication satellite 131.

Specifically, the non-terrestrial communication quality information acquisition unit 33 calculates the Doppler shift (frequency shift due to the Doppler effect) between the communication satellite 131 and the communication device 2 based on the relative velocity of the communication satellite 131 and the communication device 2 obtained from the ephemeris information of the communication satellite 131 obtained by the ephemeris information acquisition unit 31 and the location information of the communication device 2 obtained by the location information acquisition unit 32. And, the non-terrestrial communication quality information acquisition unit 33 calculates the Doppler shift between the communication satellite 131 and the satellite antenna 134 based on the relative velocity of the communication satellite 131 and the satellite antenna 134 obtained from the ephemeris information of the communication satellite 131 obtained by the ephemeris information acquisition unit 31 and the known location information of the satellite antenna 134.

Similarly, the non-terrestrial communication quality information acquisition unit 33 calculates the communication delay between the communication satellite 131 and the communication device 2 based on the relative distance of the communication satellite 131 and the communication device 2 obtained from the ephemeris information of the communication satellite 131 obtained by the ephemeris information acquisition unit 31 and the location information of the communication device 2 obtained by the location information acquisition unit 32. And, the non-terrestrial communication quality information acquisition unit 33 calculates the communication delay between the communication satellite 131 and the satellite antenna 134 based on the relative distance of the communication satellite 131 and the satellite antenna 134 obtained from the ephemeris information of the communication satellite 131 obtained by the ephemeris information acquisition unit 31 and the known location information of the satellite antenna 134. Some or all of the above calculation of the Doppler shift and/or communication delay is preferably performed by the communication device 2 that has obtained the ephemeris information from the communication satellite 131 etc. using its own location information. In this case, the ephemeris information acquisition unit 31, the location information acquisition unit 32, and the non-terrestrial communication quality information acquisition unit 33 are provided in the communication device 2.

The non-terrestrial communication quality information sharing unit 34 and the communication ratio determining unit 35 are provided in the central unit 137 common to TN and the NTN. The non-terrestrial communication quality information sharing unit 34 shares the non-terrestrial communication quality information acquired by the non-terrestrial communication quality information acquisition unit 33 among the NTN (non-terrestrial signal processing unit 135 and/or communication satellite 131) and the TN (terrestrial signal processing unit 125 and/or terrestrial base stations 111, 121). In the example of Figure 2, the central unit 137 (127) is shared among the NTN and the TN, so the non-terrestrial communication quality information provided by the non-terrestrial communication quality information acquisition unit 33 to the central unit 137 (127) is automatically shared between the NTN and the TN. It is preferable that the non-terrestrial communication quality information acquisition unit 33 periodically acquires the non-terrestrial communication quality information more than a certain frequency and provides it to the central unit 137 (1 27), and the non-terrestrial communication quality information sharing unit 34 periodically updates the non-terrestrial communication quality information shared among the NTN and the TN.

If the non-terrestrial communication quality information acquisition unit 33 is provided in the communication device 2, the non-terrestrial communication quality information (Doppler shift and/or communication delay) calculated by the communication device 2 may be provided to the central unit 137 (non-terrestrial communication quality information sharing unit 34) by either NTN or TN. In either case, the RRC connection (Radio Resource Control Connection) in each network can be used.

If the communication device 2 as the non-terrestrial communication quality information acquisition unit 33 provides the non-terrestrial communication quality information to the central unit 137 through the NTN, the non-terrestrial communication quality information is sent by establishing the RRC connection from the communication device 2 to the central unit 137 via the communication satellite 131, satellite antenna 134, and distributed unit 136. In this way, the distributed unit 136 shares the non-terrestrial communication quality information acquired via communication satellite 131 and satellite antenna 134 from communication devices 2 in non-terrestrial communication cell 132 to the central unit 137. In addition, if the communication device 2 as the non-terrestrial communication quality information acquisition unit 33 provides the non-terrestrial communication quality information to the central unit 137 through the TN, the non-terrestrial communication quality information is sent by establishing the RRC connection from the communication device 2 to the central unit 137 (127) via the terrestrial base station 111, 121 and distributed unit 126. In this way, the distributed unit 126 shares the non-terrestrial communication quality information acquired via the terrestrial base station 111, 121 from communication devices 2 in terrestrial communication cell 112, 122 to the central unit 137 (127).

The communication ratio determining unit 35 determines the ratio of the TN and the NTN to be used for communication with the communication device 2 in the overlapping area OA of the terrestrial communication cell 112, 122 and the non-terrestrial communication cell 132, based on the non-terrestrial communication quality information acquired by the non-terrestrial communication quality information acquisition unit 33 and shared among the TN and the NTN by the non-terrestrial communication quality information sharing unit 34. For example, when the Doppler shift and/or communication delay with respect to the communication satellite 131 improves (when the quality of the non-terrestrial communication increases), the usage ratio of NTN is raised (and usage ratio of TN is lowered), and when the Doppler shift and/or the communication delay with respect to the communication satellite 131 deteriorates (when the quality of non-terrestrial communication becomes lower), the usage ratio of TN is increased (and usage ratio of NTN is decreased). In this way, TN and NTN can be used together in the communication of the communication device 2 in the overlapping area OA of the terrestrial communication cells 112, 122 and the non-terrestrial communication cell 132, and the usage ratio can be appropriately adjusted based on the non-terrestrial communication quality information shared among the NTN and the TN, the communication efficiency of the communication device 2 can be improved.

The central unit 137 (127), in which the non-terrestrial communication quality information sharing unit 34 and the communication ratio determining unit 35 are provided, is connected to the core network CN. If the core network CN is the EPC in 4G, the central unit 137 and the core network CN are interconnected by the S1 interface etc. If the core network CN is the 5GC in 5G, the central unit 137 and the core network CN are interconnected by the NG interface etc. The core network CN is connected to a data network DN such as the Internet.

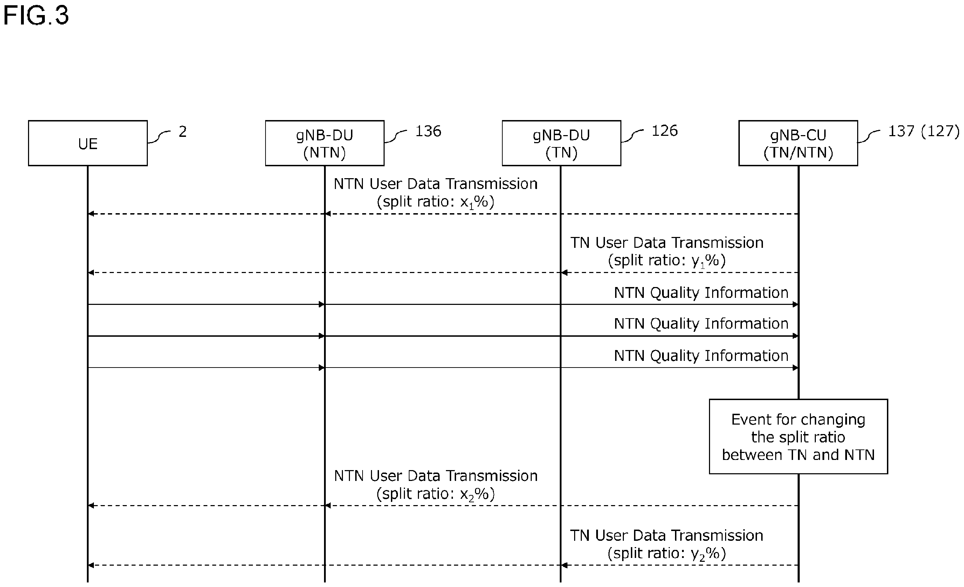

Figure 3 shows an example of the communication control process by the communication control apparatus 3 of the first embodiment (Figure 2). In the communication of the communication device 2 in the overlapping area OA of the terrestrial communication cells 112, 122 and the non-terrestrial communication cells 132, TN and NTN are used together. In the beginning of Figure 3, x₁% of the downlink communication packets from the central unit 137 (127) to the communication device 2 are sent by NTN via the distributed unit 136, satellite antenna 134, and communication satellite 131, and y₁% of the downlink communication packets from the central unit 137 (127) to the communication device 2 are sent by the TN via the distributed unit 126, terrestrial base stations 111, 121. Here, the sum of NTN communication ratio x₁ and TN communication ratio yi is 100%. The uplink communication from the communication device 2 to the central unit 137 can be also based on the similar communication ratio to use TN and NTN together.

In the case where the communication device 2 is equipped with the ephemeris information acquisition unit 31, the location information acquisition unit 32, and the non-terrestrial communication quality information acquisition unit 33, the communication device 2 periodically provides the calculated non-terrestrial communication quality information (Doppler shift and/or communication delay) to the central unit 137 via the distributed unit 136, for example, using the RRC connection in the NTN at more than a certain frequency. Alternatively, the communication device 2 may periodically provide the calculated non-terrestrial communication quality information to the central unit 137 (127) via the distributed unit 126 using the RRC connection in TN at a certain frequency or more. In this way, the non-terrestrial communication quality information is periodically updated and shared among the NTN and the TN by the non-terrestrial communication quality information sharing unit 34 of the central unit 137. As long as the non-terrestrial communication quality information shared among NTN and TN remains within a certain range, the initial NTN communication ratio x₁ and the initial TN communication ratio yi are maintained without change. The non-terrestrial communication quality information acquisition unit 33 may be provided in the central unit 137. In this case, the ephemeris information acquisition unit 31 and the location information acquisition unit 32, which are provided inside or outside the central unit 137, shall periodically provide the acquired information to the non-terrestrial communication quality information acquisition unit 33 at more than a certain frequency.

If the non-terrestrial communication quality information shared among NTN and TN by the non-terrestrial communication quality information sharing unit 34 exceeds a predetermined threshold (shown as "Event for changing the split ratio between TN and NTN" in Figure 3), the communication ratio determining unit 35 shall change the initial NTN communication ratio x₁ and the initial TN communication ratio y₁. If the NTN communication ratio after the change is x₂ and the TN communication ratio after the change is y₂, the sum of the NTN communication ratio x₂ and the TN communication ratio y₂ is 100%, as before the change. Two types of thresholds can be set: a high-quality threshold indicating that the quality of non-terrestrial communication has become significantly higher than initial quality with initial communication ratio (x₁, y₁), and a low-quality threshold indicating that the quality of non-terrestrial communication has become significantly lower than initial quality with initial communication ratio (x₁, y₁). If the non-terrestrial communication quality information exceeds the high-quality threshold, the communication ratio determining unit 35 increases the NTN communication ratio from x₁ to x₂ (x₁ < x₂) and decreases the TN communication ratio from yi to y₂ (y₁ > y₂). If the non-terrestrial communication quality information exceeds the low-quality threshold, the communication ratio determining unit 35 decreases the NTN communication ratio from x₁ to x₂ (x₁ > x₂) and increases the TN communication ratio from yi to y₂ (y₁ < y₂).

In this way, TN and NTN can be used together in the communication of the communication device 2 in the overlapping area OA of the terrestrial communication cells 112, 122 and the non-terrestrial communication cell 132, and the usage ratio can be appropriately adjusted based on the non-terrestrial communication quality information shared among the NTN and the TN, the communication efficiency of the communication device 2 can be improved.

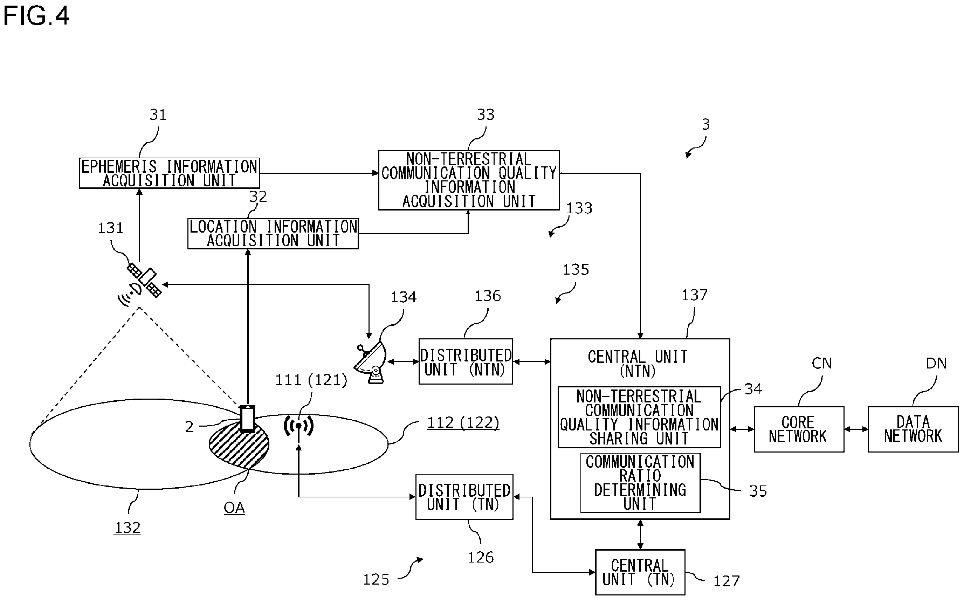

Figure 4 shows the functional block diagram of the second embodiment of the communication control apparatus 3 that controls the communication of the communication devices 2 in the overlapping area OA of the terrestrial communication cells 112, 122 and non-terrestrial communication cell 132. The same sign is assigned to the similar components as in the above-mentioned embodiment, and redundant explanations are omitted.

The terrestrial signal processing unit 125 in the TN comprises distributed unit 126 on the side of the terrestrial base station 111, 121 and central unit 127 on the side of core network CN. The central unit 127 in the TN and the central unit 137 in the NTN are interconnected by the Xn interface etc. Of these two central units 127 and 137, the central unit 137 in the NTN, which is connected to the CN, functions as the DC anchor in the dual connectivity (DC) that uses TN/NTN together. The central unit 137 as a dual connectivity anchor aggregates not only information from the core network CN side, but also information from the radio access network RAN side of both TN and NTN. In addition, terrestrial base stations 111, 121, distributed unit 126 and central unit 127 in the TN are connected to the core network CN via non-terrestrial signal processing unit 135 (central unit 137).

The non-terrestrial communication quality information sharing unit 34 and the communication ratio determining unit 35 of the communication control apparatus 3 are provided in the central unit 137 as the dual connectivity anchor. The non-terrestrial communication quality information sharing unit 34 shares the non-terrestrial communication quality information provided by the non-terrestrial communication quality information acquisition unit 33 in the NTN via the RRC connection from the communication device 2 in the non-terrestrial communication cell 132 to the central unit 137 via the communication satellite 131, satellite antenna 134, and distributed unit 136, with the central unit 127 in the TN accompanying the terrestrial base station 111, 112. In the first embodiment shown in Figures 2 and 3, the sharing of the non-terrestrial communication quality information by the non-terrestrial communication quality information sharing unit 34 was performed periodically at more than a certain frequency. However, in this embodiment, the sharing of the non-terrestrial communication quality information by the non-terrestrial communication quality information sharing unit 34 may be performed when the non-terrestrial communication quality information exceeds a predetermined threshold (i.e., when the communication ratio in the dual connectivity of TN/NTN is changed).

This is because if the non-terrestrial communication quality information is periodically provided to the central unit 137 as the dual connectivity anchor, which is also provided with the communication ratio determining unit 35, the communication ratio in the dual connectivity of TN/NTN can be determined appropriately, without the non-terrestrial communication quality information sharing unit 34 having to share the non-terrestrial communication quality information regularly with the TN (central unit 127). Based on the non-terrestrial communication quality information that exceeds the threshold value, the communication ratio determining unit 35 changes the ratio of the TN and the NTN to be used for the communication with the communication device 2 in the overlapping area OA of the terrestrial communication cells 112, 122 and non-terrestrial communication cell 132.

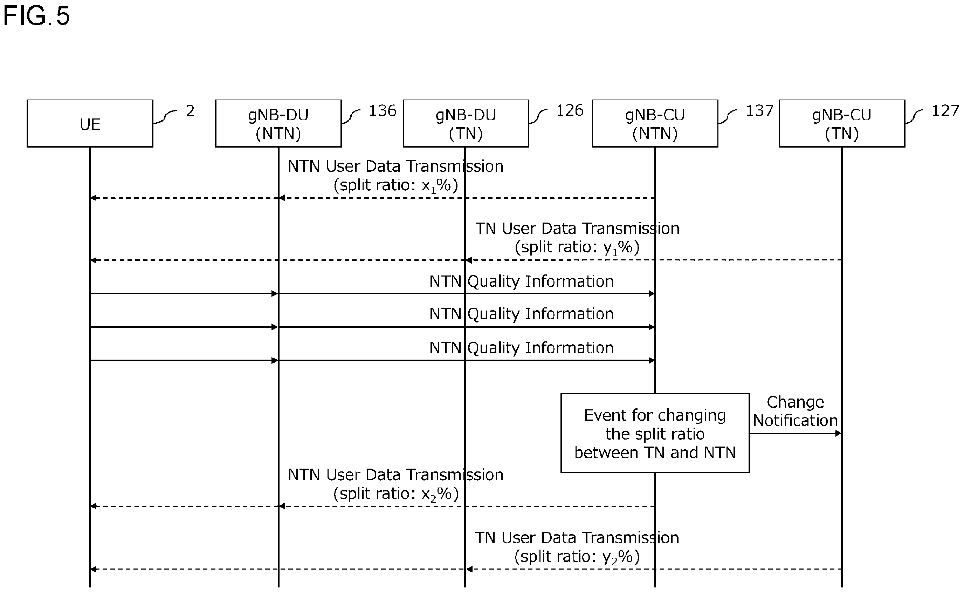

Figure 5 shows an example of the communication control process by the communication control apparatus 3 of the second embodiment (Figure 4). In the communication of the communication device 2 in the overlapping area OA of the terrestrial communication cells 112, 122 and the non-terrestrial communication cell 132, TN and NTN are used together. In the beginning of Figure 5, x₁% of the downlink communication packets to the communication device 2 is sent from the central unit 137 by the NTN via the distributed unit 136, satellite antenna 134, and communication satellite 131, and y₁% of the downlink communication packets to the communication device 2 is sent from the central unit 127 by the TN via the distributed unit 126, terrestrial base stations 111, 121. The uplink communication from the communication device 2 can be also based on the similar communication ratio to use TN and NTN together.

In the case where the communication device 2 is equipped with the ephemeris information acquisition unit 31, the location information acquisition unit 32, and the non-terrestrial communication quality information acquisition unit 33, the communication device 2 periodically provides the calculated non-terrestrial communication quality information (Doppler shift and/or communication delay) to the central unit 137 via the distributed unit 136, using the RRC connection in the NTN at more than a certain frequency. In this way, as long as the non-terrestrial communication quality information periodically provided to the central unit 137 remains within a certain range, the non-terrestrial communication quality information sharing unit 34 does not share the non-terrestrial communication quality information with the TN (the central unit 127), and the initial NTN communication ratio x₁ and the initial TN communication ratio y₁ are maintained without change. The non-terrestrial communication quality information acquisition unit 33 may be provided in the central unit 137. In this case, the ephemeris information acquisition unit 31 and the location information acquisition unit 32, which are provided inside or outside the central unit 137, shall periodically provide the acquired information to the non-terrestrial communication quality information acquisition unit 33 at more than a certain frequency.

If the non-terrestrial communication quality information that the non-terrestrial communication quality information acquisition unit 33 periodically provides to the central unit 137 exceeds a predetermined high-quality or low-quality threshold (shown as "Event for changing the split ratio between TN and NTN" in Figure 5), the communication ratio determining unit 35 shall change the initial NTN communication ratio x₁ and the initial TN communication ratio yi. In addition, the non-terrestrial communication quality information sharing unit 34 notifies the TN (central unit 127) of the fact that the non-terrestrial communication quality information exceeds the predetermined threshold and the updated communication ratio (x₂, y₂). In this way, TN and NTN can be used together in the communication of the communication device 2 in the overlapping area OA of the terrestrial communication cells 112, 122 and the non-terrestrial communication cell 132, and the usage ratio can be appropriately adjusted based on the non-terrestrial communication quality information, the communication efficiency of the communication device 2 can be improved.

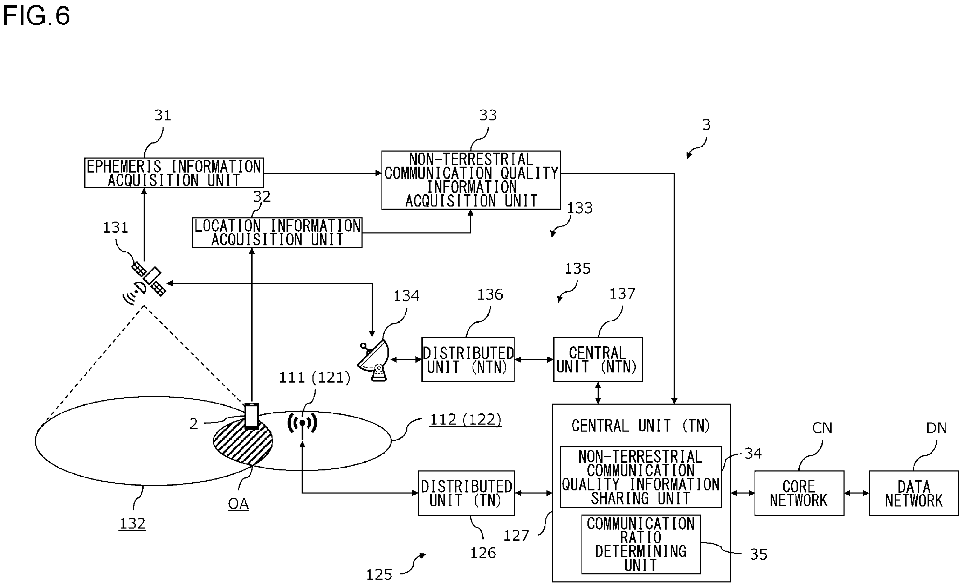

Figure 6 shows the functional block diagram of the third embodiment of the communication control apparatus 3 that controls the communication of the communication devices 2 in the overlapping area OA of the terrestrial communication cells 112, 122 and non-terrestrial communication cell 132. The same sign is assigned to the similar components as in the above-mentioned embodiments, and redundant explanations are omitted.

The terrestrial signal processing unit 125 in the TN comprises distributed unit 126 on the side of the terrestrial base station 111, 121 and central unit 127 on the side of core network CN. The central unit 127 in the TN and the central unit 137 in the NTN are interconnected by the X2 interface or the Xn interface etc. Of these two central units 127 and 137, the central unit 127 in the TN, which is connected to the CN, functions as the DC anchor in the dual connectivity that uses TN/NTN together. The central unit 127 as a dual connectivity anchor aggregates not only information from the core network CN side, but also information from the radio access network RAN side of both TN and NTN. In addition, the communication satellite 131, the satellite antenna 134, the distributed unit 136 and the central unit 137 in the NTN are connected to the core network CN via terrestrial signal processing unit 125 (central unit 127) accompanying the terrestrial base station 111, 121.

The non-terrestrial communication quality information sharing unit 34 and the communication ratio determining unit 35 of the communication control apparatus 3 are provided in the central unit 127 as the dual connectivity anchor. The non-terrestrial communication quality information sharing unit 34 shares the non-terrestrial communication quality information provided by the non-terrestrial communication quality information acquisition unit 33 in the TN via the RRC connection from the communication device 2 in the terrestrial communication cell 112, 122 to the central unit 127 via the terrestrial base station 111, 121 and distributed unit 126, with the central unit 137 (non-terrestrial signal processing unit 135) in the NTN accompanying the communication satellite 131. In the first embodiment shown in Figures 2 and 3, the sharing of the non-terrestrial communication quality information by the non-terrestrial communication quality information sharing unit 34 was performed periodically at more than a certain frequency. However, in this embodiment, the sharing of the non-terrestrial communication quality information by the non-terrestrial communication quality information sharing unit 34 may be performed when the non-terrestrial communication quality information exceeds a predetermined threshold (i.e., when the communication ratio in the dual connectivity of TN/NTN is changed).

This is because if the non-terrestrial communication quality information is periodically provided to the central unit 127 as the dual connectivity anchor, which is also provided with the communication ratio determining unit 35, the communication ratio in the dual connectivity of TN/NTN can be determined appropriately, without the non-terrestrial communication quality information sharing unit 34 having to share the non-terrestrial communication quality information regularly with the NTN (central unit 137). Based on the non-terrestrial communication quality information that exceeds the threshold value, the communication ratio determining unit 35 changes the ratio of the TN and the NTN to be used for the communication with the communication device 2 in the overlapping area OA of the terrestrial communication cells 112, 122 and non-terrestrial communication cell 132.

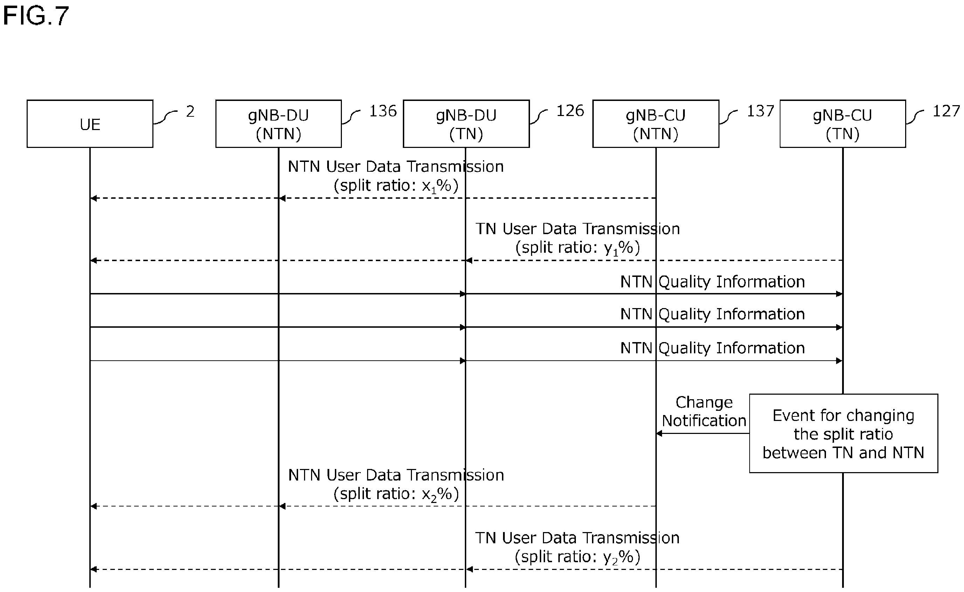

Figure 7 shows an example of the communication control process by the communication control apparatus 3 of the third embodiment (Figure 6). In the communication of the communication device 2 in the overlapping area OA of the terrestrial communication cells 112, 122 and the non-terrestrial communication cell 132, TN and NTN are used together. In the beginning of Figure 7, x₁% of the downlink communication packets to the communication device 2 is sent from the central unit 137 by the NTN via the distributed unit 136, satellite antenna 134, and communication satellite 131, and y₁% of the downlink communication packets to the communication device 2 is sent from the central unit 127 by the TN via the distributed unit 126, terrestrial base stations 111, 121. The uplink communication from the communication device 2 can be also based on the similar communication ratio to use TN and NTN together.

In the case where the communication device 2 is equipped with the ephemeris information acquisition unit 31, the location information acquisition unit 32, and the non-terrestrial communication quality information acquisition unit 33, the communication device 2 periodically provides the calculated non-terrestrial communication quality information (Doppler shift and/or communication delay) to the central unit 127 via the distributed unit 126, using the RRC connection in the TN at more than a certain frequency. In this way, as long as the non-terrestrial communication quality information periodically provided to the central unit 127 remains within a certain range, the non-terrestrial communication quality information sharing unit 34 does not share the non-terrestrial communication quality information with the NTN (the central unit 137), and the initial NTN communication ratio x₁ and the initial TN communication ratio y₁ are maintained without change. The non-terrestrial communication quality information acquisition unit 33 may be provided in the central unit 127. In this case, the ephemeris information acquisition unit 31 and the location information acquisition unit 32, which are provided inside or outside the central unit 127, shall periodically provide the acquired information to the non-terrestrial communication quality information acquisition unit 33 at more than a certain frequency.

If the non-terrestrial communication quality information that the non-terrestrial communication quality information acquisition unit 33 periodically provides to the central unit 127 exceeds a predetermined high-quality or low-quality threshold (shown as "Event for changing the split ratio between TN and NTN" in Figure 7), the communication ratio determining unit 35 shall change the initial NTN communication ratio x₁ and the initial TN communication ratio yi. In addition, the non-terrestrial communication quality information sharing unit 34 notifies the NTN (central unit 137) of the fact that the non-terrestrial communication quality information exceeds the predetermined threshold and the updated communication ratio (x₂, y₂). In this way, TN and NTN can be used together in the communication of the communication device 2 in the overlapping area OA of the terrestrial communication cells 112, 122 and the non-terrestrial communication cell 132, and the usage ratio can be appropriately adjusted based on the non-terrestrial communication quality information, the communication efficiency of the communication device 2 can be improved.

The present disclosure has been described above based on embodiments. It is understood by those skilled in the art that the embodiments are exemplary and that various variations are possible in the combination of each component and each process thereof, and that such variations are also within the scope of the present disclosure.

In the embodiments, the case where TN and NTN are used together in the communication of one communication device 2 is described. It is also understood that the present disclosure can be applied to the case where a plurality of different NTNs (hereinafter referred to as the first non-terrestrial network and the second non-terrestrial network) are used together in the communication of one communication device 2. In this case, the communication control apparatus 3 controls the first non-terrestrial network comprising flying first non-terrestrial base station (similar to the communication satellite 131) and capable of communicating with communication device 2 in a first non-terrestrial communication cell (similar to the satellite communication cell 132) provided by the first non-terrestrial base station, and the second non-terrestrial network comprising flying second non-terrestrial base station (similar to the communication satellite 131) and capable of communicating with communication device 2 in a second non-terrestrial communication cell (similar to the satellite communication cell 132) provided by the second non-terrestrial base station.

The first non-terrestrial network is provided with a first antenna (similar to the satellite antenna 134) capable of communicating with the first non-terrestrial base station, and a first non-terrestrial signal processing unit (similar to the non-terrestrial signal processing unit 135) that processes first non-terrestrial signal communicated with communication device 2 in the first non-terrestrial communication cell via the first antenna and the first non-terrestrial base station. The second non-terrestrial network is provided with a second antenna (similar to the satellite antenna 134) capable of communicating with the second non-terrestrial base station, and a second non-terrestrial signal processing unit (similar to the non-terrestrial signal processing unit 135) that processes second non-terrestrial signal communicated with communication device 2 in the second non-terrestrial communication cell via the second antenna and the second non-terrestrial base station.

The communication control apparatus 3 comprises: a non-terrestrial communication quality information sharing unit 34 that shares, among the first non-terrestrial signal processing unit and the second non-terrestrial signal processing unit, first non-terrestrial communication quality information (e.g. Doppler shift and/or communication delay) regarding the quality of the first non-terrestrial communication via the first non-terrestrial base station between communication device 2 in the first non-terrestrial communication cell and the first antenna, and second non-terrestrial communication quality information (e.g. Doppler shift and/or communication delay) regarding the quality of the second non-terrestrial communication via the second non-terrestrial base station between communication device 2 in the second non-terrestrial communication cell and the second antenna; and a communication ratio determining unit 35 that determines the ratio of the first non-terrestrial network and the second non-terrestrial network to be used for communication with communication device 2 in overlapping area OA of the first non-terrestrial communication cell and the second non-terrestrial communication cell based on the first non-terrestrial communication quality information and the second non-terrestrial communication quality information.

The functional configuration of each device described in the embodiment can be realized by hardware resources or software resources, or by the cooperation of hardware resources and software resources. As hardware resources, processors, ROM, RAM, and other LSIs can be used. Operating systems, applications, and other programs can be used as software resources.

The present disclosure relates to communication control technology in communication system.

1 wireless communication system, 2 communication device, 3 communication control apparatus, 11 5G wireless communication system, 12 4G wireless communication system, 13 13 Satellite communication system, 31 Ephemeris information acquisition unit, 32 location information acquisition unit, 33 non-terrestrial communication quality information acquisition unit, 34 non-terrestrial communication quality information sharing unit, 35 Communication ratio determining unit, 111 5G base station, 112 5G cell, 121 4G base station, 122 4G cell, 125 Terrestrial signal processing unit, 126 Distributed unit, 127 Central unit, 131 Communication satellite, 132 Satellite communication cell, 133 Gateway, 1 34 Satellite antenna, 135 Non-terrestrial signal processing unit, 136 Distributed unit, 137 Central unit.

## Claims

1. A communication control apparatus that controls a terrestrial network comprising terrestrial base station installed on the ground and capable of communicating with communication device in a terrestrial communication cell provided by the terrestrial base station, and a non-terrestrial network comprising flying non-terrestrial base station and capable of communicating with communication device in a non-terrestrial communication cell provided by the non-terrestrial base station, wherein
the non-terrestrial network is provided with an antenna capable of communicating with the non-terrestrial base station, and a non-terrestrial signal processing unit that processes non-terrestrial signal communicated with communication device in the non-terrestrial communication cell via the antenna and the non-terrestrial base station, and
the communication control apparatus comprising:
a non-terrestrial communication quality information sharing unit that shares, among the non-terrestrial signal processing unit and the terrestrial network, non-terrestrial communication quality information regarding the quality of the non-terrestrial communication via the non-terrestrial base station between communication device in the non-terrestrial communication cell and the antenna; and
a communication ratio determining unit that determines the ratio of the terrestrial network and the non-terrestrial network to be used for communication with communication device in overlapping area of the terrestrial communication cell and the non-terrestrial communication cell based on the non-terrestrial communication quality information.

2. The communication control apparatus according to claim 1, wherein the non-terrestrial communication quality information sharing unit is provided in the non-terrestrial signal processing unit, and shares the non-terrestrial communication quality information obtained from the communication device in the non-terrestrial communication cell via the non-terrestrial base station and the antenna to the terrestrial network.

3. The communication control apparatus according to claim 2, wherein
the terrestrial network is connected to core network via the non-terrestrial signal processing unit,
the non-terrestrial communication quality information sharing unit shares the non-terrestrial communication quality information with the terrestrial network when the non-terrestrial communication quality information exceeds a predetermined threshold, and
the communication ratio determining unit changes the ratio of the terrestrial network and the non-terrestrial network used for communication with the communication device in the overlapping area of the terrestrial communication cell and the non-terrestrial communication cell based on the non-terrestrial communication quality information that exceeds the threshold.

4. The communication control apparatus according to claim 1, wherein the non-terrestrial communication quality information sharing unit is provided in the terrestrial network, and shares the non-terrestrial communication quality information obtained from the communication device in the terrestrial communication cell to the non-terrestrial signal processing unit.

5. The communication control apparatus according to claim 4, wherein
the non-terrestrial signal processing unit is connected to core network via the terrestrial network,
the non-terrestrial communication quality information sharing unit shares the non-terrestrial communication quality information with the non-terrestrial signal processing unit when the non-terrestrial communication quality information exceeds a predetermined threshold, and
the communication ratio determining unit changes the ratio of the terrestrial network and the non-terrestrial network used for communication with the communication device in the overlapping area of the terrestrial communication cell and the non-terrestrial communication cell based on the non-terrestrial communication quality information that exceeds the threshold.

6. The communication control apparatus according to any of claims 1 to 5, wherein the non-terrestrial signal processing unit is a baseband unit that processes the non-terrestrial signal in baseband.

7. The communication control apparatus according to claim 6, wherein
the baseband unit comprises a distributed unit on the antenna side and a central unit on the core network side, and
the non-terrestrial communication quality information sharing unit shares the non-terrestrial communication quality information among the central unit and the terrestrial network.

8. The communication control apparatus according to claim 7, wherein the distributed unit shares the non-terrestrial communication quality information obtained from the communication device in the non-terrestrial communication cell via the non-terrestrial base station and the antenna to the central unit.

9. The communication control apparatus according to any of claims 1 to 8, wherein the non-terrestrial communication quality information includes at least one of a Doppler shift between the communication device in the non-terrestrial communication cell and/or the antenna and the non-terrestrial base station, and a communication delay between the communication device in the non-terrestrial communication cell and/or the antenna and the non-terrestrial base station.

10. The communication control apparatus according to any of claims 1 to 9, wherein the non-terrestrial base station is a communication satellite flying in outer space.

11. A communication control apparatus that controls a first non-terrestrial network comprising flying first non-terrestrial base station and capable of communicating with communication device in a first non-terrestrial communication cell provided by the first non-terrestrial base station, and a second non-terrestrial network comprising flying second non-terrestrial base station and capable of communicating with communication device in a second non-terrestrial communication cell provided by the second non-terrestrial base station, wherein
the first non-terrestrial network is provided with a first antenna capable of communicating with the first non-terrestrial base station, and a first non-terrestrial signal processing unit that processes first non-terrestrial signal communicated with communication device in the first non-terrestrial communication cell via the first antenna and the first non-terrestrial base station,
the second non-terrestrial network is provided with a second antenna capable of communicating with the second non-terrestrial base station, and a second non-terrestrial signal processing unit that processes second non-terrestrial signal communicated with communication device in the second non-terrestrial communication cell via the second antenna and the second non-terrestrial base station, and
the communication control apparatus comprising:
a non-terrestrial communication quality information sharing unit that shares, among the first non-terrestrial signal processing unit and the second non-terrestrial signal processing unit, first non-terrestrial communication quality information regarding the quality of the first non-terrestrial communication via the first non-terrestrial base station between communication device in the first non-terrestrial communication cell and the first antenna, and second non-terrestrial communication quality information regarding the quality of the second non-terrestrial communication via the second non-terrestrial base station between communication device in the second non-terrestrial communication cell and the second antenna; and
a communication ratio determining unit that determines the ratio of the first non-terrestrial network and the second non-terrestrial network to be used for communication with communication device in overlapping area of the first non-terrestrial communication cell and the second non-terrestrial communication cell based on the first non-terrestrial communication quality information and the second non-terrestrial communication quality information.

12. A communication control method that controls a terrestrial network comprising terrestrial base station installed on the ground and capable of communicating with communication device in a terrestrial communication cell provided by the terrestrial base station, and a non-terrestrial network comprising flying non-terrestrial base station and capable of communicating with communication device in a non-terrestrial communication cell provided by the non-terrestrial base station, wherein
the non-terrestrial network is provided with an antenna capable of communicating with the non-terrestrial base station, and a non-terrestrial signal processing unit that processes non-terrestrial signal communicated with communication device in the non-terrestrial communication cell via the antenna and the non-terrestrial base station, and
the communication control method comprising:
sharing, among the non-terrestrial signal processing unit and the terrestrial network, non-terrestrial communication quality information regarding the quality of the non-terrestrial communication via the non-terrestrial base station between communication device in the non-terrestrial communication cell and the antenna; and
determining the ratio of the terrestrial network and the non-terrestrial network to be used for communication with communication device in overlapping area of the terrestrial communication cell and the non-terrestrial communication cell based on the non-terrestrial communication quality information.

13. A communication control program that controls a terrestrial network comprising terrestrial base station installed on the ground and capable of communicating with communication device in a terrestrial communication cell provided by the terrestrial base station, and a non-terrestrial network comprising flying non-terrestrial base station and capable of communicating with communication device in a non-terrestrial communication cell provided by the non-terrestrial base station, wherein
the non-terrestrial network is provided with an antenna capable of communicating with the non-terrestrial base station, and a non-terrestrial signal processing unit that processes non-terrestrial signal communicated with communication device in the non-terrestrial communication cell via the antenna and the non-terrestrial base station, and
the communication control program causing a computer to perform:
sharing, among the non-terrestrial signal processing unit and the terrestrial network, non-terrestrial communication quality information regarding the quality of the non-terrestrial communication via the non-terrestrial base station between communication device in the non-terrestrial communication cell and the antenna; and
determining the ratio of the terrestrial network and the non-terrestrial network to be used for communication with communication device in overlapping area of the terrestrial communication cell and the non-terrestrial communication cell based on the non-terrestrial communication quality information.
